# EUROPEAN PATENT SPECIFICATION

(11) **EP 1 878 897 B1**
(45) Date of publication and mention of the grant of the patent: **20.08.2014**
(21) Application number: 07111227.0
(22) Date of filing: 28.06.2007
(51) Int. Cl.: F02D 41/06

(54) **Reverse rotation detection apparatus and reverse rotation detection method for internal combustion engine**
Vorrichtung und Verfahren zur Rücklauferkennung für einen Verbrennungsmotor
Appareil de détection de rotation inverse et procédé de détection de rotation inverse pour moteur à combustion interne

(30) Priority: 10.07.2006 JP 2006189016
(43) Date of publication of application: 16.01.2008
(73) Proprietor: Keihin Corporation, Shinjuku-ku, Tokyo (JP)
(72) Inventor: Ishikawa, Shinichi, Takanezawa-machi, Shioya-gun, Tochigi-ken (JP); Tokugawa, Kazuhito, Takanezawa-machi, Shioya-gun, Tochigi-ken (JP); Watanabe, Kunitoshi, Takanezawa-machi, Shioya-gun, Tochigi-ken (JP)
(74) Representative: Staudt, Hans-Peter

(56) References cited:
- EP-A1- 1 384 878
- DE-A1- 10 320 367
- US-A- 6 058 909
- US-B1- 6 786 212

## Description

### BACKGROUND OF THE INVENTION

### 1. Field of the Invention

The present invention relates to a reverse rotation detection apparatus and a reverse rotation detection method for detecting rotation in the reverse direction of a crankshaft in an internal combustion engine.

### 2. Description of the Related Background Art

In an internal combustion engine, a crankshaft may rotate in reverse from a rotation direction which is previously given, namely from a state of rotation in the normal rotation direction under unstable combustion conditions such as engine start-up. In a conventional apparatus for detecting reverse rotation of a crankshaft, which is an abnormal operational state in an internal combustion engine, a plurality of teeth are formed at equal intervals on the outer periphery of an engine output shaft, two rotation speed sensors are provided for generating pulse signals having mutually different phases when the teeth pass therethrough, and a deviation signal between the signals obtained from the two rotation speed sensors is output as a sine wave signal via a filter and a comparator. The sine wave signal differs greatly between a normal rotation state and a reverse rotation state, and reverse rotation is determined from the difference (see Japanese Unexamined Patent Application Publication H11-117780).

However, in the conventional reverse rotation detection apparatus, since the two rotation speed sensors are used, reverse rotation is first detected when the teeth pass through the two rotation speed sensors after the crankshaft has begun to rotate in reverse. Therefore, reverse rotation cannot be detected quickly.

US 6058909 discloses a cylinder identifying apparatus with detection of reverse rotation.

### SUMMARY OF THE INVENTION

It is therefore an object of the present invention to provide a reverse rotation detection apparatus and a reverse rotation detection method with which reverse rotation of a crankshaft in an internal combustion engine can be detected quickly and precisely.

A reverse rotation detection apparatus of the present invention comprises: a rotor having a plurality of portions to be detected which are arranged at equal angular intervals on an outer periphery thereof, for rotating in association with a crankshaft of an internal combustion engine; a pickup disposed near the outer periphery of the rotor, for detecting a front end position and a rear end position of each of the plurality of portions individually to generate a pulse signal; period detecting means for sequentially detecting a first period, which is an interval from a detected time of the front end position to a detected time of the rear end position, and a second period, which is an interval from the detection time of the rear end position to the detection time of the front end position, in accordance with the pulse signal output by the pickup; and reverse rotation determining means for comparing a first ratio between a current value and a previous value of the first period with a first threshold value, comparing a second ratio between a current value and a previous value of the second period with a second threshold value, and generating a reverse rotation detection signal in accordance with comparison results thereof.

A reverse rotation detection method of the present invention is a method for detecting reverse rotation of a crankshaft in an internal combustion engine including a rotor having a plurality of portions to be detected which are arranged at equal angular intervals on an outer periphery thereof, for rotating in association with a crankshaft of an internal combustion engine, and a pickup disposed near the outer periphery of the rotor, for detecting a front end position and a rear end position of each of the plurality of portions individually to generate a pulse signal, the method comprising the steps of: sequentially detecting a first period, which is an interval from a detected time of the front end position to a detected time of the rear end position, and a second period, which is an interval from the detection time of the rear end position to the detection time of the front end position, in accordance with the pulse signal output by the pickup; and comparing a first ratio between a current value and a previous value of the first period with a first threshold value, comparing a second ratio between a current value and a previous value of the second period with a second threshold value, and generating a reverse rotation detection signal in accordance with comparison results thereof.

According to the reverse rotation detection apparatus and reverse rotation detection method of the present invention, when reverse rotation occurs in the crankshaft, the first period or second period measured at the time point is extremely long, and therefore, by comparing the first ratio between the current value and previous value of the first period with the first threshold value and comparing the second ratio between the current value and previous value of the second period with the second threshold value, reverse rotation of the crankshaft can be detected quickly and precisely.

According to the reverse rotation detection apparatus and reverse rotation detection method of the present invention, when reverse rotation occurs in the crankshaft, the edge interval period measured at the time point is extremely long, and therefore, by comparing the ratio between the current value and previous value of the front end position edge interval period or rear end position edge interval period with the third threshold value, reverse rotation of the crankshaft can be detected quickly and precisely.

### BRIEF DESCRIPTION OF THE DRAWINGS

Fig. 1 is a block diagram showing an embodiment of the present invention;
Fig. 2 is a view showing the state of a signal waveform in each point of a reverse rotation detection apparatus shown in Fig. 1;
Fig. 3 is a flowchart illustrating reverse rotation detection processing;
Fig. 4 is a view showing an example of crank angle signal waveforms corresponding to reverse rotation positions P1 to P4 on a rotor;
Fig. 5 is a flowchart illustrating other reverse rotation detection processing; and
Fig. 6 is a view showing an example of crank angle signal waveforms corresponding to reverse rotation positions Q1 to Q3 on a rotor in the case of the reverse rotation detection processing shown in Fig. 5.

### DETAILED DESCRIPTION OF THE INVENTION

An embodiment of the present invention will be described in detail below with reference to the drawings.

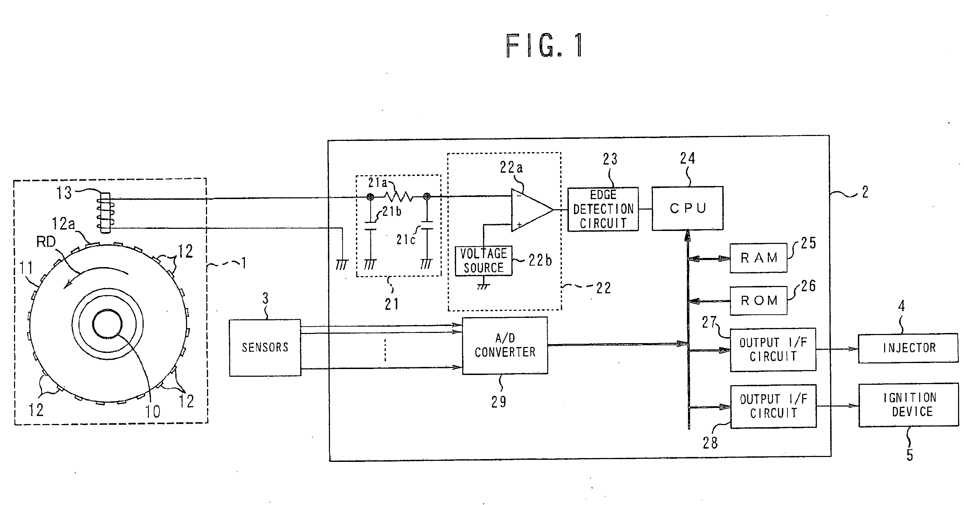

Fig. 1 shows an engine control apparatus to which a reverse rotation detection apparatus according to the present invention is applied. The engine control apparatus comprises a crank angle detection mechanism 1, an ECU (Electric Control Unit) 2, a sensor group 3, and an injector 4, and an ignition apparatus 5.

The crank angle detection mechanism 1 has a disk-shaped rotor 11 provided on a crankshaft 10 of a four-cycle internal combustion engine. The rotor 11 rotates in association with rotation of the crankshaft 10. Twenty-four convex portions 12 made of a magnetic material are provided continuously at fifteen degree intervals on the outer peripheral surface of the rotor 11 as portions to be detected. A magnetic pickup 13 is disposed near the outer periphery of the rotor 11.

When one of the convex portions 12 passes by the magnetic pickup 13 by rotation of the rotor 11, a pair of negative/positive pulses is generated by the magnetic pickup 13. The negative and positive pulses serve as a crank angle pulse signal.

The fifteen degree intervals of the twenty-four convex portions 12 formed on the outer peripheral surface of the rotor 11 relate to rear end positions of the convex portions 12 in a normal rotation direction of the rotor 11 (the direction of an arrow RD). One convex portion 12a of the twenty-four convex portions 12 indicates a reference angle of the crank angle. The reference angle corresponds to the rear end position of the convex portion 12a in the rotation direction of the rotor 11, or more specifically a position of -7 degrees from TDC, indicating the compression top dead center of a piston, within the 360 degrees of the rotor 11. Further, the convex portion 12a is formed to be longer than the other convex portions in the rotation direction of the rotor 11. In other words, the length of the convex portion 12a from the rear end position to a front end position is greater than that of the other convex portions, and therefore a time point at which the front end position of the convex portion 12a is detected by the magnetic pickup 13 is earlier than a time point at which the front end position of each of the other convex portions 12 is detected. The length of the long convex portion 12a from the front end position to the rear end position is at least twice the interval between the front end position of the convex portion 12a and the rear end position of the adjacent convex portion 12, for example. Further, the length of the convex portion 12a from the front end position to the rear end position is at least twice the length of each of the other convex portions 12 from the front end position to the rear end position, for example.

When the rotor 11 rotates in the rotation direction, the rear end of the convex portion 12 detected immediately after the convex portion 12a is positioned within a range of 0 to 10 degrees from TDC. Further, a crank angle signal generated by the magnetic pickup 13 concerning the long convex portion 12a serves as a reference pulse signal.

The ECU 2 is connected to an output of the magnetic pickup 13. The ECU 2 comprises a filter circuit 21, a comparison circuit 22, an edge detection circuit 23, a CPU 24, a RAM 25, a ROM 26, output interface circuits 27, 28, and an A/D converter 29.

The filter circuit 21 has a resistor 21a and capacitors 21b, 21c, and removes a noise component of a high frequency from the pulse signal output by the magnetic pickup 13 to output the aforementioned negative/positive pulse pair.

The comparison circuit 22 has a comparator 22a and a reference voltage source 22b, and operates as a comparison circuit having a hysteresis function. Further, the comparison circuit 22 switches from an high level output to an low level output when the output signal of the filter circuit 21 increases to a predetermined voltage Vth, and switches from low level output to the high level output when the output signal of the filter circuit 21 decreases to a predetermined voltage -Vth. A period of the high level output corresponds to a period of each of the convex portions 12 of the rotor 11, including the convex portion 12a, and a period of the low level output corresponds to a period between two convex portions 12 which are adjacent to each other. The output signal of the comparison circuit 22 is supplied to the CPU 24 as a crank angle signal.

The edge detection circuit 23 detects a rising edge and a falling edge of the signal output by the comparison circuit 22.

The CPU 24 counts the low level period and the high level period individually in accordance with the edge detection performed by the edge detection circuit 23, and determines the long convex portion 12a indicating the reference angle of the crank angle in distinction from the other convex portions 12 on the basis of the counting result. The CPU 24 also performs ignition timing and fuel injection control in accordance with the determination result.

Further, the CPU 24 detects reverse rotation of the crankshaft 10 by repeatedly executing reverse rotation detection processing as described below.

The CPU 24, RAM 25, ROM 26, output interface circuits 27, 28, and A/D converter 29 are all connected to a common bus.

The output interface circuit 27 drives the injector 4 in accordance with an injector drive command from the CPU 24. The injector 4 is provided near an intake port of an intake pipe of the internal combustion engine, and injects fuel when driven. The output interface circuit 28 activates the ignition apparatus 5 in accordance with an electrification start command and an ignition start command from the CPU 24. More specifically, the output interface circuit 28 starts to electrify an ignition coil (not shown) of the ignition apparatus 5 in accordance with the electrification start command, and causes a spark plug (not shown) to perform spark discharge by halting the electrification in accordance with the ignition start command. The ignition apparatus 5 is a full transistor type ignition apparatus, for example, which electrifies the ignition coil, generates a high voltage from an accumulated charge in the ignition coil, and applies the high voltage to the spark plug.

The A/D converter 29 is provided for converting analog signals from the sensor group 3 for detecting engine operating parameters required in engine control, such as an intake pipe internal pressure P_{B}, a cooling water temperature TW, a throttle opening θₜₕ, and an exhaust gas oxygen concentration O₂, into digital signals.

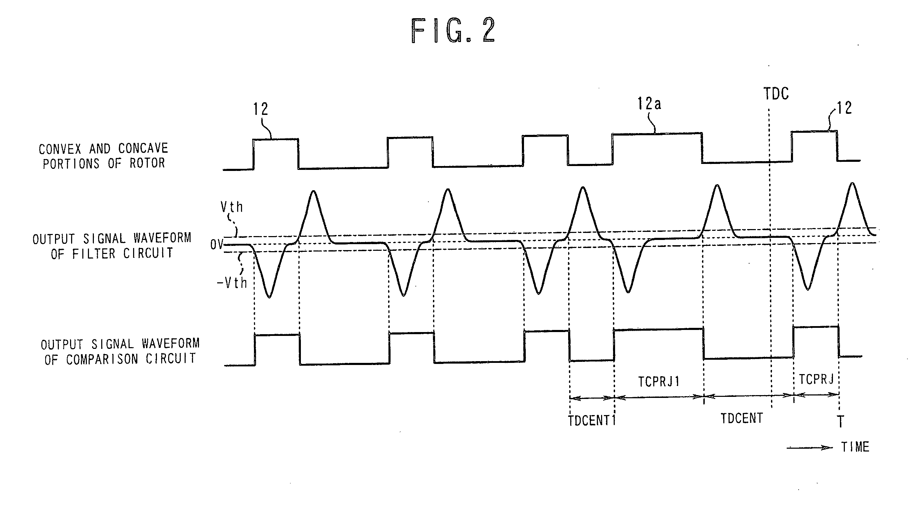

In the engine control apparatus configured as described above, an output signal of the magnetic pickup 13 passes through the filter circuit 21 to form a substantially inverted triangle-shaped negative pulse relating to the front end of the convex portion 12 (including 12a) of the rotor 11 and a substantially triangular positive pulse relating to the rear end, as shown in Fig. 2. When the output signal of the filter circuit 21 decreases, it is compared with the predetermined voltage -Vth in the comparison circuit 22, and when the output signal increases, it is compared with the predetermined voltage Vth. Thus, as shown in Fig. 2, the crank angle signal supplied to the edge detection circuit 23 from the comparison circuit 22 is at a high level in relation to each of the convex portions 12 of the rotor 11 and at a low level in relation to each of the concave portions between the convex portions 12.

The edge detection circuit 23 detects the rising edge and falling edge of the crank angle signal, and supplies the CPU 24 with signals indicating the respective detection times. The CPU 24 measures the period between the rising edge and falling edge detected by the edge detection circuit 23. The rising edge corresponds to the front end of the convex portion 12, and the falling edge corresponds to the rear end of the convex portion 12. The period from the rising edge to the falling edge corresponding to the convex portion 12 of the rotor 11 is detected as a convex portion period TCPRJ (first period). The period from the falling edge to the rising edge corresponding to the concave portion between the convex portions 12 of the rotor 11 is detected as a concave portion period TCDENT (second period). In Fig. 2, TCPRJ denotes a current value of the convex portion period, TCPRJ1 denotes a previous value of the convex portion period, TCDENT denotes a current value of the concave portion period, and TCDENT1 denotes a previous value of the concave portion period, using a time point T as a reference.

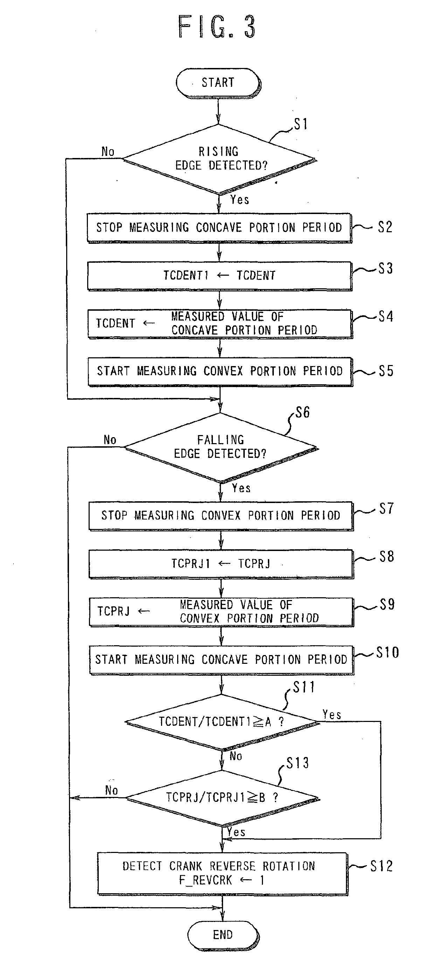

As shown in Fig. 3, in the reverse rotation detection processing, the CPU 24 first determines whether or not a rising edge of the output signal from the comparison circuit 22 has been detected in accordance with the output signal of the edge detection circuit 23 (step S1). When the rising edge has been detected, the CPU 24 stops measuring the concave portion period (step S2), stores the concave portion period TCDENT held at the current time point as the previous value TCDENT1 (step S3), stores the concave portion period newly obtained through the measurement as the current concave portion period TCDENT (step S4), and starts to measure a convex portion period (step S5).

On the other hand, when the rising edge has not been detected, a determination is made as to whether or not a falling edge of the output signal from the comparison circuit 22 has been detected (step S6). When the falling edge has been detected, the CPU 24 stops measuring the convex portion period (step S7), stores the convex portion period TCPRJ held at the current time point as the previous value TCPRJ1 (step S8), stores the convex portion period newly obtained through the measurement as the current convex portion period TCPRJ (step S9), and starts to measure a concave portion period (step S10).

After executing the step S10, the CPU 24 determines whether or not a ratio (second ratio) = TCDENT/TCDENT1 between the current value TCDENT and the previous value TCDENT1 of the concave portion period, obtained in the steps S4 and S3, is equal to or greater than a threshold value A (second threshold value) (step S11). This step is used to determine whether or not the crankshaft 10 has rotated in reverse during the measurement period of the current value TCDENT of the concave portion period. When TCDENT/TCDENT1 ≥ A, this indicates that the crankshaft 10 has rotated in reverse, and therefore a crank reverse rotation flag F_REVCRK is set to "1" (step S12). On the other hand, when TCDENT/TCDENT1 < A, a determination is made as to whether or not a ratio (first ratio) = TCPRJ/TCPRJ1 between the current value TCPRJ and the previous value TCPRJ1 of the convex portion period, obtained in the steps S9 and S8, is equal to or greater than a threshold value B (first threshold value) (step S13). This step is used to determine whether or not the crankshaft 10 has rotated in reverse during the measurement period of the current value TCPRJ of the convex portion period. When TCPRJ/TCPRJ1 ≥ B, this indicates that the crankshaft 10 has rotated in reverse, and therefore the routine advances to the step S12, where the crank reverse rotation flag F_REVCRK is set to "1." F_REVCRK = 1 corresponds to a reverse rotation detection signal. The crank reverse rotation flag F_REVCRK is reset to "0" immediately before starting the engine.

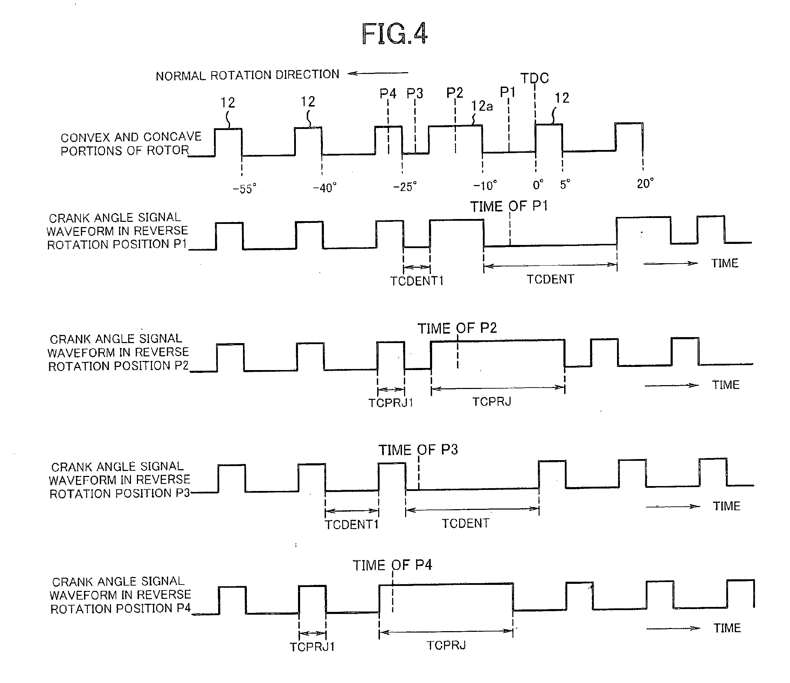

Fig. 4 shows an example of a waveform of the crank angle signal (the output signal of the comparison circuit 22) corresponding to reverse rotation positions P1 to P4 at which the rotor 11 starts to rotate in reverse. In the normal rotation direction of the rotor 11, the rear end positions of the convex portions 12 and long convex portion 12a are disposed at fifteen degree intervals, the convex portions 12 each have a width of five degrees, and the convex portion 12a has a width of ten degrees. Furthermore, in the rotor 11, the TDC position corresponds to the front end position of a convex portion 12 that is positioned adjacent to the rear end position side of the long convex portion 12a.

In the case where the reverse rotation position is P1 or P3, TCDENT/TCDENT1 ≥ A is satisfied. In the case where the reverse rotation position is P2 or P4, TCPRJ/TCPRJ1 ≥ B is satisfied. When the crankshaft 10 starts to rotate in reverse, the rotation speed (angular velocity) of the rotor 11 decreases gradually in the normal rotation direction until it reaches zero, and then increases gradually in the reverse rotation direction. As a result, the periods of TCDENT and TCPRJ become longer than the periods of TCDENT1 and TCPRJ1, respectively.

When the CPU 24 detects reverse rotation of the crankshaft 10 in the reverse rotation detection processing such that F_REVCRK = 1, ignition of the ignition apparatus 5 and fuel injection through the injector 4 are stopped.

In the reverse rotation detection processing of Fig. 3, when reverse rotation of the crankshaft 10 occurs, the convex portion period or concave portion period measured at the time point becomes extremely long, and therefore, by determining whether or not the ratio = TCDENT/TCDENT1 between the current value TCDENT and the previous value TCDENT1 of the concave portion period is equal to or greater than the threshold value A or whether or not the ratio = TCPRJ/TCPRJ1 between the current value TCPRJ and the previous value TCPRJ1 of the convex portion period is equal to or greater than the threshold value B, reverse rotation of the crankshaft 10 can be detected quickly and precisely.

In the step S11, the ratio TCDENT/TCDENT1 is calculated and compared with the threshold value A, but the ratio may be calculated as TCDENT1/TCDENT, whereupon a determination is made as to whether or not TCDENT1/TCDENT ≤ A. Similarly, in the step S13, the ratio TCPRJ/TCPRJ1 is calculated and compared with the threshold value B, but the ratio may be calculated as TCPRJ1/TCDPRJ, whereupon a determination is made as to whether or not TCPRJ1/TCPRJ ≤ B. When TCDENT1/TCDENT ≤ A or TCPRJ1/TCPRJ ≤ B is satisfied, F_REVCRK = 1 is set in the step S12. Further, the values of the threshold values A, B relating to TCDENT1/TCDENT and TCPRJ1/TCPRJ respectively are set at different values to the threshold values A, B relating to TCDENT/TCDENT1 and TCPRJ/TCPRJ1 respectively.

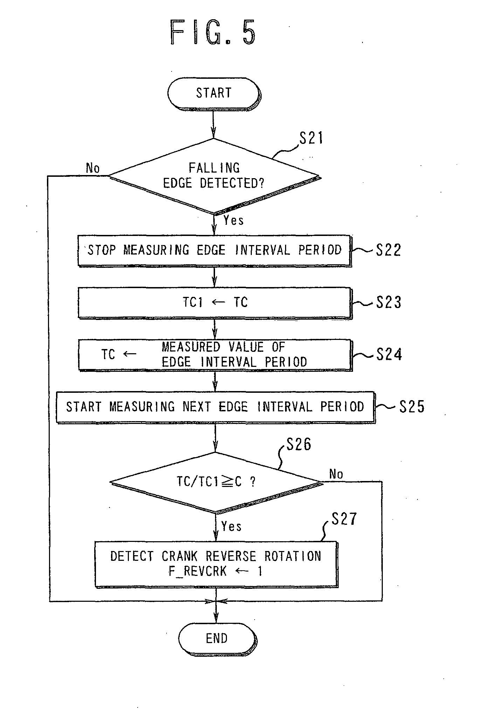

Fig. 5 shows another example of the reverse rotation detection processing. In the reverse rotation detection processing of Fig. 5, the period between falling edges of the output signals from the comparison circuit 22 is measured as an edge interval period, whereupon a determination is made as to whether or not a ratio between a current value and a previous value of the edge interval period is equal to or greater than a threshold value C.

More specifically, first the CPU 24 determines whether or not the falling edge of the output signal from the comparison circuit 22 has been detected in accordance with the output signal from the edge detection circuit 23 (step S21). When the falling edge has been detected, the CPU 24 stops measuring the edge interval period (step S22), stores an edge interval period TC held at that point in time as a previous value TC1 (step S23), stores the edge interval period obtained anew through the measurement as the current edge interval period TC (step S24), and starts to measure the next edge interval period (step S25).

After executing the step S25, the CPU 24 determines whether or not a ratio = TC/TC1 between the current value TC and the previous value TC1 of the edge interval period, obtained in the steps S24 and S23, is equal to or greater than the threshold value C (third threshold value) (step S26). This step is used to determine whether or not the crankshaft 10 has rotated in reverse during the measurement period of the current value TC of the edge interval period. When TC/TC1 ≥ C, this indicates that the crankshaft 10 has rotated in reverse, and therefore the crank reverse rotation flag F_REVCRK is set to "1" (step S27).

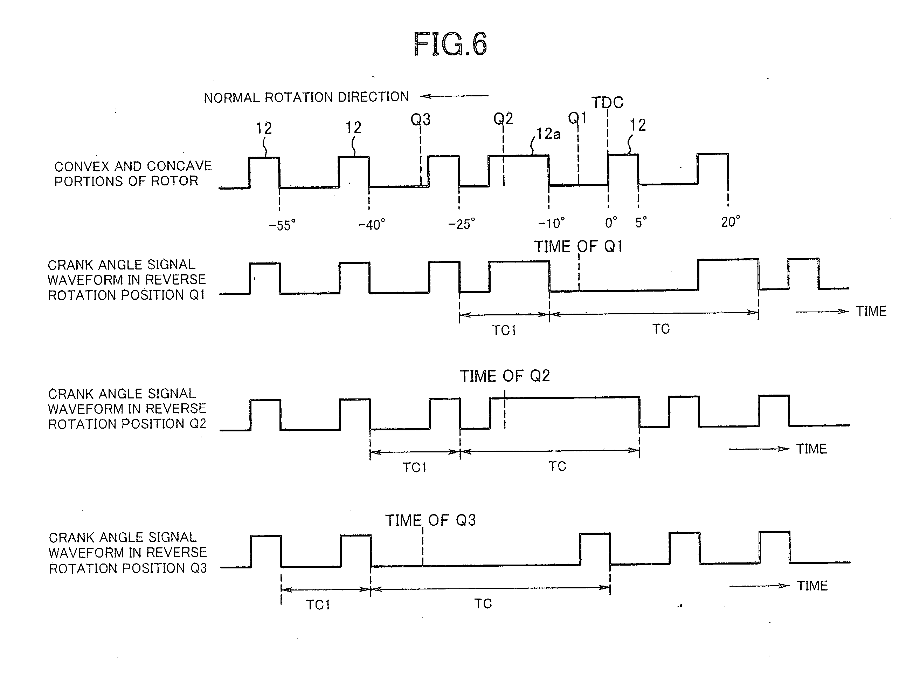

Fig. 6 shows an example of the crank angle signal waveform corresponding to reverse rotation positions Q1 to Q3 at which the rotor 11 starts to rotate in reverse. In the normal rotation direction of the rotor 11, the rear end positions of the convex portions 12 and long convex portion 12a are disposed at fifteen degree intervals, the convex portions 12 have a width of five degrees, and the convex portion 12a has a width of ten degrees. Furthermore, in the rotor 11, the TDC position corresponds to the front end position of the convex portion 12 that is positioned adjacent to the rear end position side of the long convex portion 12a.

In the case of each of the reverse rotation positions Q1 to Q3, TC/TC1 ≥ C in the reverse rotation detection processing of Fig. 5 is satisfied. When the crankshaft 10 rotates in reverse, the rotation speed (angular velocity) of the rotor 11 decreases gradually in the normal rotation direction until it reaches zero, and then increases gradually in the reverse rotation direction. As a result, the period of TC becomes longer than the period of TC1.

Thus, in the reverse rotation detection processing of Fig. 5, when reverse rotation of the crankshaft 10 occurs, the edge interval period measured at the time point becomes extremely long, and therefore, by determining whether or not the ratio = TC/TC1 between the current value TC and the previous value TC1 of the edge interval period is equal to or greater than the threshold value C, reverse rotation of the crankshaft 10 can be detected quickly and precisely.

In the step S26, the ratio TC/TC1 is calculated and compared with the threshold value C, but the ratio may be calculated as TC1/TC, whereupon a determination is made as to whether or not TC1/TC ≤ C. When TC1/TC ≤ C is satisfied, F_REVCRK = 1 is set in the step S27. The value of the threshold value C relating to TC1/TC is set at a different value to the threshold value C relating to TC/TC1.

In the embodiment described above, the convex portions 12 are formed on the rotor 11 as portions to be detected, but concave portions may be formed in the outer peripheral surface of the rotor 11 as the portions to be detected. Furthermore, instead of forming convex portions and concave portions on the outer peripheral surface of the rotor 11, the portions to be detected may be buried in the rotor 11 or formed as marks on the outer peripheral surface.

Further, in the above embodiment, the present invention is applied to a single-cylinder, four-cycle internal combustion engine, but the present invention may be applied to a multicylinder, four-cycle internal combustion engine or a two-cycle internal combustion engine.

Furthermore, in the embodiment described above, the portions to be detected are detected by the magnetic pickup 13, but the present invention is not limited thereto. The portions to be detected may be Hall elements or optical elements. Moreover, in the reverse rotation detection processing of Fig. 5, the pickup 13 need only detect at least one of the front end position and rear end position of the portions to be detected.

Further, in the embodiment described above, reverse rotation of the crankshaft 10 is detected, but an unstable rotation state in which reverse rotation may occur following ignition may also be detected.

Furthermore, in the reverse rotation detection processing of Fig. 5, the difference between the detection time of the rear end position and the detection time of the next rear end position is detected as the edge interval period, but when the front ends of the convex portions 12 are formed at equal intervals, the difference between the detection time of the front end position and the detection time of the next front end position may be detected as the edge interval period to obtain TC/TC1.

## Claims

1. A reverse rotation detection apparatus comprising:
a rotor (11) having a plurality of portions (12) to be detected which are arranged at equal angular intervals on an outer periphery thereof, for rotating in association with a crankshaft (10) of an internal combustion engine;
a pickup (13) disposed near said outer periphery of said rotor, for detecting a front end position and a rear end position of each of said plurality of portions individually to generate a pulse signal;
period detecting means for sequentially detecting a first period, which is an interval from a detected time of the front end position to a detected time of the rear end position, and a second period, which is an interval from the detection time of the rear end position to the detection time of the front end position, in accordance with said pulse signal output by said pickup; and
reverse rotation determining means for comparing a first ratio between a current value and a previous value of the first period with a first threshold value, comparing a second ratio between a current value and a previous value of the second period with a second threshold value, and generating a reverse rotation detection signal in accordance with comparison results thereof.

2. The reverse rotation detection apparatus according to claim 1, wherein said reverse rotation determining means generates the reverse rotation detection signal when the first ratio = the current value of the first period/the previous value of the first period is equal to or greater than the first threshold value, and generates the reverse rotation detection signal when the first ratio is smaller than the first threshold value and the second ratio = the current value of the second period/the previous value of the second period is equal to or greater than the second threshold value.

3. The reverse rotation detection apparatus according to claim 1, wherein each of said plurality of portions to be detected is constituted by a convex portion, and one portion of said plurality of portions to be detected is different in length from the other portions in a rotation direction of said rotor in order to detect a reference angle of a crank angle.

4. The reverse rotation detection apparatus according to claim 3, wherein the rear end positions of said plurality of portions to be detected are arranged respectively at equal angular intervals in a rotation direction of said rotor, and a length from the rear end position to the front end position of the one portion for detecting the reference angle is greater than a length from the rear end position to the front end position of each of the other detected portions.

5. The reverse rotation detection apparatus according to claim 1, wherein said pickup is a magnetic pickup for magnetically detecting each of said plurality of portions to be detected, which are disposed near the outer periphery of said rotor and each constituted by a magnetic material.

6. A reverse rotation detection method for detecting reverse rotation of a crankshaft (10) in an internal combustion engine including a rotor (11) having a plurality of portions (12) to be detected which are arranged at equal angular intervals on an outer periphery thereof, for rotating in association with a crankshaft of an internal combustion engine, and a pickup (13) disposed near said outer periphery of said rotor, for detecting a front end position and a rear end position of each of said plurality of portions individually to generate a pulse signal, said method comprising the steps of:
sequentially detecting a first period, which is an interval from a detected time of the front end position to a detected time of the rear end position, and a second period, which is an interval from the detection time of the rear end position to the detection time of the front end position, in accordance with said pulse signal output by said pickup; and
comparing a first ratio between a current value and a previous value of the first period with a first threshold value, comparing a second ratio between a current value and a previous value of the second period with a second threshold value, and generating a reverse rotation detection signal in accordance with comparison results thereof.

## Patentansprüche

1. Vorrichtung zur Rücklauferkennung, aufweisend:
einen Rotor (11) mit einer Vielzahl von zu erkennenden Abschnitten (12), die in gleichmäßigen Winkelabständen an einem Außenumfang von diesem angeordnet sind, um sich zusammen mit einer Kurbelwelle (10) eines Verbrennungsmotors zu drehen;
einen Fühler (13), der nahe am Außenumfang des Rotors angeordnet ist, um eine vordere Endposition und eine hintere Endposition jedes der Vielzahl von Abschnitten einzeln zu erkennen, um ein Impulssignal zu erzeugen;
Zeitraumerkennungsmittel zum sequentiellen Erkennen eines ersten Zeitraums,
der ein Intervall von einer erkannten Zeit der vorderen Endposition bis zu einer erkannten Zeit der hinteren Endposition ist, und eines zweiten Zeitraums, der ein Intervall von der Erkennungszeit der hinteren Endposition bis zur Erkennungszeit der vorderen Endposition ist, und zwar gemäß dem von dem Fühler ausgegebenen Impulssignal; und
Mittel zur Rücklaufbestimmung zum Vergleichen eines ersten Verhältnisses zwischen einem aktuellen Wert und einem vorigen Wert des ersten Zeitraums mit einem ersten Schwellenwert, Vergleichen eines zweiten Verhältnisses zwischen einem aktuellen Wert und einem vorigen Wert des zweiten Zeitraums mit einem zweiten Schwellenwert, und Erzeugen eines Rücklauferkennungssignals entsprechend den Vergleichsergebnissen hiervon.

2. Vorrichtung zur Rücklauferkennung nach Anspruch 1, wobei die Mittel zur Rücklaufbestimmung das Rücklauferkennungssignal erzeugen, wenn das erste Verhältnis = der aktuelle Wert des ersten Zeitraums/der vorige Wert des ersten Zeitraums gleich oder größer ist als der erste Schwellenwert, und das Rücklauferkennungssignal erzeugen, wenn das erste Verhältnis kleiner ist als der erste Schwellenwert und das zweite Verhältnis = der aktuelle Wert des zweiten Zeitraums/der vorige Wert des zweiten Zeitraums gleich oder größer als der zweite Schwellenwert ist.

3. Vorrichtung zur Rücklauferkennung nach Anspruch 1, wobei jeder der Vielzahl der zu erkennenden Abschnitte durch einen konvexen Abschnitt gebildet ist und sich ein Abschnitt der Vielzahl von zu erkennenden Abschnitten in der Länge von den anderen Abschnitten in einer Drehrichtung des Rotors unterscheidet, um einen Bezugswinkel eines Kurbelwinkels zu erkennen.

4. Vorrichtung zur Rücklauferkennung nach Anspruch 3, wobei die hinteren Endpositionen der Vielzahl von zu erkennenden Abschnitten jeweils in gleichmäßigen Winkelabständen in einer Drehrichtung des Rotors angeordnet sind und eine Länge von der hinteren Endposition zu der vorderen Endposition des einen Abschnitts zum Erkennen des Bezugswinkels größer ist als eine Länge von der hinteren Endposition zu der vorderen Endposition von jedem der anderen erkannten Abschnitte.

5. Vorrichtung zur Rücklauferkennung nach Anspruch 1, wobei der Fühler ein magnetischer Fühler zur magnetischen Erkennung jedes der Vielzahl von zu erkennenden Abschnitten ist, die nahe am Außenumfang des Rotors angeordnet und jeweils aus einem magnetischen Material gefertigt sind.

6. Verfahren zur Rücklauferkennung zum Erkennen eines Rücklaufs einer Kurbelwelle (10) in einem Verbrennungsmotor, umfassend einen Rotor (11) mit einer Vielzahl von zu erkennenden Abschnitten (12), die in gleichmäßigen Winkelabständen an einem Außenumfang von diesem angeordnet sind, zum Drehen zusammen mit einer Kurbelwelle eines Verbrennungsmotors, und einen in der Nähe des Außenumfangs des Rotors angeordneten Fühler (13) zum Erkennen einer vorderen Endposition und einer hinteren Endposition jedes der Vielzahl von Abschnitten einzeln, um ein Impulssignal zu erzeugen, wobei das Verfahren die folgenden Schritte aufweist:
sequentielles Erkennen eines ersten Zeitraums, der ein Intervall von einer erkannten Zeit der vorderen Endposition bis zu einer erkannten Zeit der hinteren Endposition ist, und eines zweiten Zeitraums, der ein Intervall von der Erkennungszeit der hinteren Endposition bis zur Erkennungszeit der vorderen Endposition ist, und zwar gemäß dem von dem Fühler ausgegebenen Impulssignal; und
Vergleichen eines ersten Verhältnisses zwischen einem aktuellen Wert und einem vorigen Wert des ersten Zeitraums mit einem ersten Schwellenwert, Vergleichen eines zweiten Verhältnisses zwischen einem aktuellen Wert und einem vorigen Wert des zweiten Zeitraums mit einem zweiten Schwellenwert, und Erzeugen eines Rücklauferkennungssignals entsprechend den Vergleichsergebnissen hiervon.

## Revendications

1. Appareil de détection de rotation inverse comprenant:
un rotor (11) ayant une pluralité de parties (12) devant être détectées qui sont agencées à des intervalles angulaires égaux sur une périphérie extérieure de celui-ci, pour tourner en association avec un vilebrequin (10) d'un moteur à combustion interne;
un capteur (13) disposé à proximité de ladite périphérie extérieure dudit rotor,
pour détecter une position d'extrémité avant et une position d'extrémité arrière de chacune de ladite pluralité de parties individuellement pour générer un signal d'impulsion;
un moyen de détection de période pour détecter de manière séquentielle une première période, qui est un intervalle allant d'un temps détecté de la position d'extrémité avant à un temps détecté de la position d'extrémité arrière, et une seconde période, qui est un intervalle allant du temps de détection de la position d'extrémité arrière au temps de détection de la position d'extrémité avant, conformément audit signal d'impulsion délivré par ledit capteur; et
un moyen de détermination de rotation inverse pour comparer un premier rapport entre une valeur actuelle et une valeur précédente de la première période à une première valeur de seuil, comparer un second rapport entre une valeur actuelle et une valeur précédente de la seconde période à une seconde valeur de seuil, et générer un signal de détection de rotation inverse en fonction des résultats de la comparaison de ceux-ci.

2. Appareil de détection de rotation inverse selon la revendication 1, dans lequel ledit moyen de détermination de rotation inverse génère le signal de détection de rotation inverse lorsque le premier rapport = la valeur actuelle de la première période/la valeur précédente de la première période est égal ou supérieur à la première valeur de seuil, et génère le signal de détection de rotation inverse lorsque le premier rapport est inférieur à la première valeur de seuil et le second rapport = la valeur actuelle de la seconde période/la valeur précédente de la seconde période est égal ou supérieur à la seconde valeur de seuil.

3. Appareil de détection de rotation inverse selon la revendication 1, dans lequel chacune de ladite pluralité de parties devant être détectées est constituée par une partie convexe, et une partie de ladite pluralité de parties devant être détectées est différente en longueur des autres parties dans une direction de rotation dudit rotor afin de détecter un angle de référence d'un angle de vilebrequin.

4. Appareil de détection de rotation inverse selon la revendication 3, dans lequel les positions d'extrémité arrière de ladite pluralité de parties devant être détectées sont agencées respectivement à des intervalles angulaires égaux dans une direction de rotation dudit rotor, et une longueur allant de la position d'extrémité arrière à la position d'extrémité avant de ladite partie pour la détection de l'angle de référence est supérieure à une longueur allant de la position d'extrémité arrière à la position d'extrémité avant de chacune des autres parties détectées.

5. Appareil de détection de rotation inverse selon la revendication 1, dans lequel ledit capteur est un capteur magnétique pour détecter magnétiquement chacune de ladite pluralité de parties devant être détectées, qui sont disposées à proximité de la périphérie extérieure dudit rotor et constituées chacune d'un matériau magnétique.

6. Procédé de détection de rotation inverse pour détecter la rotation inverse d'un vilebrequin (10) dans un moteur à combustion interne comprenant un rotor (11) ayant une pluralité de parties (12) devant être détectées, qui sont agencées à des intervalles angulaires égaux sur une périphérie extérieure de celui-ci, pour tourner en association avec un vilebrequin d'un moteur à combustion interne, et un capteur (13) disposé à proximité de ladite périphérie extérieure dudit rotor, pour détecter une position d'extrémité avant et une position d'extrémité arrière de chacune de ladite pluralité de parties individuellement pour générer un signal d'impulsion, ledit procédé comprenant les étapes consistant à:
détecter de manière séquentielle une première période, qui est un intervalle allant d'un temps détecté de la position d'extrémité avant à un temps détecté de la position d'extrémité arrière, et une seconde période, qui est un intervalle allant du temps de détection de la position d'extrémité arrière au temps de détection de la position d'extrémité avant, selon ledit signal d'impulsion délivré par ledit capteur; et
comparer un premier rapport entre une valeur actuelle et une valeur précédente de la première période à une première valeur de seuil, comparer un second rapport entre une valeur actuelle et une valeur précédente de la seconde période à une seconde valeur de seuil, et générer un signal de détection de rotation inverse selon les résultats de comparaison de ceux-ci.
